(19) Europäisches Patentamt

European Patent Office

Office européen des brevets

(11) **EP 0 651 264 B1**

(12) **EUROPÄISCHE PATENTSCHRIFT**

(45) Veröffentlichungstag und Bekanntmachung des Hinweises auf die Patenterteilung:
**08.03.2000  Patentblatt 2000/10**

(51) Int. Cl.[7]: **G01V 8/10**,  G06T 7/00

(21) Anmeldenummer: **94115903.0**

(22) Anmeldetag: **08.10.1994**

(54) **Verfahren zur automatischen Detektion von festen oder beweglichen Objekten in natürlicher Umgebung einer Echtzeitbildfolge**

Automatic detection method of fixed or moving objects in the natural environment of a real time image sequence

Procédé de détection automatique des objets fixes ou en mouvement dans un environnement naturel d'une suite d'images en temps réel

(84) Benannte Vertragsstaaten:
**AT DE ES FR GB IT NL SE**

(30) Priorität: **28.10.1993 DE 4336751**

(43) Veröffentlichungstag der Anmeldung:
**03.05.1995  Patentblatt 1995/18**

(73) Patentinhaber:
**LFK Lenkflugkörpersysteme GmbH
81663 München (DE)**

(72) Erfinder:
• **Kieslich, Wolfgang, Ing.-grad.
D-22880 Wedel (DE)**

• **Nahapetian, Vahe, Dipl.-Ing.
D-22880 Wedel (DE)**
• **Niederhofer, Karl-Heinz, Dr.-Ing.
D-85635 Siegertsbrunn (DE)**

(74) Vertreter: **Hummel, Adam et al
Daimler-Benz AG
FTP/M
Postfach 80 04 65
81663 München (DE)**

(56) Entgegenhaltungen:
**EP-A- 0 455 898        DE-A- 4 120 676
GB-A- 1 605 010        US-A- 4 364 089**

Anmerkung:   Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren gemäß dem Oberbegriff von Anspruch 1 und eine Schaltungsanordnung zur Durchführung des Verfahrens.

Ein derartiges Verfahren ist in der DE-OS 41 20 676 beschrieben, welches zur Detektion von kleinen kompakten Objekten in natürlicher Umgebung bei nahezu vollständiger Unterdrückung von irrelevanten Hintergrundinformationen des Bildes unter Verwendung eines die Umgebung abtastenden elektrooptischen Sensors mit nachgeordneter Auswerteeinheit und gegebenenfalls vorhandener Bilddarstellungseinrichtung vorgesehen ist.

Dieses Verfahren, bei dem das von einem elektrooptischen Sensor gelieferte digitale Bild zuerst durch ein zweidimensionales FIR-Filter geschickt wird, um weißes Rauschen zu reduzieren, wird dabei in folgende Schritte gegliedert:

a) Das so gefilterte Bild wird weiter verarbeitet und von mindestens drei jeweils mehrere Pixel enthaltenden Matrizen abgetastet, wobei jeder Matrix eine Referenzmenge außerhalb des zugehörigen Matrixmittelpunktes vorgegeben wird und wobei die Referenzmengen jeder Matrix sich voneinander unterscheiden.

b) Von jeder Referenzmenge werden das Maximum und Minimum der Helligkeitswerte ermittelt. Die Referenzmengen können vorzugsweise jeweils in den Ecken des 7 x 7 Bereiches (Matrix) angesiedelt sein, wobei die spezielle Auswahl der verschiedenen Referenzmengen aus Fig. 1 (schraffierte Dreiecke der DE-OS 41 20 676) zu entnehmen ist. Dieser Verarbeitungsschritt berücksichtigt die Sym-metrieerfordernisse zur Detektion kleiner, kompak-ter Objekte. Für zweidimensionale Objekte sind mindestens drei Referenzmengen und daher mindestens drei parallele Filterzweige erforderlich.

c) Im nächsten Schritt werden in jedem Filterzweig die Ergebnisse der Maxima- und Minimaberechnungen mit dem aktuellen Bildpunkt(pixel) im Zentrum der Matrix verglichen und es erfolgt eine Markierung des dem jeweiligen Matrixmittelpunkt entsprechenden Pixels als signifikant und ihr Eintrag in das Zwischenergebnisbild des Filterzweiges.

Hierbei wird das dem jeweiligen Matrixmittelpunkt entsprechende Pixel dann markiert, wenn erstens dieses Pixel um einen ersten Schwellwert heller als das Maximum der Helligkeitswerte der zugehörigen Referenzmenge ist und zweitens wenn die Streuung der zugehörigen Referenzmenge kleiner als ein weiterer fester Schwellwert ist, wobei als Maß für die Streuung der Helligkeitswerte hier die Differenz von Maximum und Minimum verwendet wird.

Es werden somit die Kriterien

$$P - M > T(K1)$$

und

$$M - m < L(K2)$$

erfüllt.

Dabei bedeuten:

P: Intensität des dem Matrixmittelpunkt entsprechenden Pixels
M: Maximum der Intensitäten der Referenzmenge
m: Minimum der Intensitäten der Referenzmenge
T: dynamischer Schwellwert
L: fester Schwellwert

Der Sinn dieses Verarbeitungsschrittes besteht darin, den zentralen Bildpunkt zu markieren, wenn sowohl der Bildpunkt genügend heller als seine Umgebung ist (dynamische Schwelle T) und seine Umgebung nicht zu stark strukturiert ist (fester Schwellwert L für Differenz M-n als Maß für die Streuung).

d) Die Anzahl der markierten Pixel des digitalen Bildes (Zwischenergebnis) wird für ein Bild bestimmt, und es werden die aktuellen Zählergebnisse mit einer oberen und unteren festen Schranke verglichen und zur Regelung der jeweiligen ersten Schwellwerte verwendet. Die Regelungskriterien sind unter Punkt f beschrieben.

e) Die markierten Pixel in den Zwischenergebnisbildern werden dilatiert, d. h. auf 3 x 3 Pixel vergrößert. Hierzu werden die benachbarten Pixel jedes markierten Pixels des digitalen Bildes markiert, so daß alle markierten Pixel eine dilatierte Menge bilden, und es werden die aus einer Referenzmenge gewonnenen dilatierten Mengenelemente mit den anderen jeweils aus einer Referenzmenge hervorgegangenen dilatierten Mengenelementen UND-verknüpft. Die UND-Verknüpfung sämtlicher Ergebnisbilder liefert das Endergebnis. Da jedoch aus Gründen unvollkommener Symmetrie nicht alle Filterzweige dasselbe Pixel markieren, ist die Erzeugung der dilatierten Mengenelemente vor der UND-Verknüpfung erforderlich.

f) Die Anzahl der markierten Pixel in jedem Filterzweig soll nicht zu groß oder zu klein sein. Um kontrastreiche und kontrastarme Szenen gleichmäßig gut verarbeiten zu können, ist eine Regelung des in den Verfahrensschritten c und d beschriebenen ersten Schwellwertes erforderlich. Diese Regelung kontrolliert die Anzahl markierter Pixel in jeden Zwischenergebnisbild derart, daß die Anzahl ungefähr konstant bleibt. Ein Vergleich der aktuellen Zählergebnisse mit einer oberen und unteren festen Schranke wird zur Regelung des jeweiligen ersten Schwellwertes derart, verwendet,

- daß der erste Schwellwert erhöht wird, wenn die aktuellen Zählergebnisse größer als die obere Schranke sind,
- daß der erste Schwellwert erniedrigt wird, wenn die aktuellen Zählergebnisse kleiner als die unter Schranke sind, und
- daß der erste Schwellwert unverändert bleibt, wenn die aktuellen Zählergebnisse innerhalb des von der oberen und unteren vorgegebenen Schranke definierten Bereiches liegen oder gleich der unteren bzw. oberen Schranke sind.

Der erste feste, beispielsweise mit T bezeichnete Schwellwert wird von Bild zu Bild incrementiert oder decrementiert bis das Kriterium

$$N_{min} < n < N_{max} \quad (K3)$$

oder

$$T_{min} < T < T_{max} \quad (K4)$$

erfüllt ist.

Dabei bedeuten:

n: Anzahl markierter Pixel in einem Filterzweig
$N_{min}$: untere Schranke
$N_{max}$: obere Schranke
$T_{min}, T_{max}$: unterer und oberer absoluter Grenzwert für den ersten Schwellwert T.

Der Erfindung liegt die Aufgabe zugrunde, ein Verfahren der eingangs genannten Art zu schaffen, durch welches möglichst viele Informationen aus den digitalen Bildern verarbeitet werden, so daß auch die Detektion von größeren festen oder beweglichen Objekten, die gegebenenfalls von verschiedenen Sensoren erzeugt werden, ermöglicht wird.

Die Aufgabe wird erfindungsgemäß durch die im Anspruch 1 angegebenen Verfahrensschritte gelöst.

Ausgestaltungen des erfindungsgemäßen Verfahrens sind in den abhängigen Ansprüchen 2 bis 12 beschrieben.

Eine Schaltungsanordnung zur Durchführung des Verfahrens ist im Anspruch 13 beansprucht. Ausgestaltungen dieser Schaltungsanordnungen sind in den abhängigen Ansprüchen 14 bis 18 beschrieben.

Für das eingangs genannte Verfahren sind erfindungsgemäß die folgenden weiteren Verfahrensschritte vorgesehen:

f) In mindestens einer ersten von n, eine Reduktionspyramide bildenden Reduktionsstufen wird das von dem Sensor gelieferte digitale Bild um den Faktor $2^n$ zur Erzeugung von digitalen Teilbildern verkleinert, deren Anzahl in x- und y-Richtung des digitalen Bildes jeweils dem Verkleinerungsfaktor $2^n$ der zugehörigen Reduktionsstufe n entspricht.

Das verkleinerte Bild wird jeweils als Eingabe für einen Punktobjektdetektor verwendet. Es ist offensichtlich, daß auch größere Objekte bei einer bestimmten Reduktionsstufe als Punktobjekte erscheinen und dann als bedeutend markiert werden. Durch diesen Mechanismus können Objekte mit unterschiedlicher Größe mit der gleichen Methode detektiert werden.

g) Für jedes erzeugte digitale Teilbild einer zugehörigen Reduktionsstufe werden nacheinander die eingangs genannten Verfahrensschritte a bis e durchgeführt, wobei die "und-verknüpften" dilatierten Mengenelemente jedes digitalen Teilbildes jeweils eine ein detektiertes Objekt darstellende Ergebnismenge (ein Teilendergebnis) in einer zugehörigen Reduktionsstufe der Reduktionspyramide bilden. Hierbei werden die redundanten Ergebnismengen (Teilendergebnisse) von unterschiedlichen Reduktionsstufen, die jeweils dasselbe Objekt in verschiedenen ähnlichen Teilbildern markieren, als "horizontale Redundanzen" sowie redundante Ergebnismengen (Teilendergebnisse) der unterschiedlichen Reduktionsstufen, die jeweils dasselbe Objekt markieren, wenn dieses eine vorgegebene Intensitätsverteilung in Größe und Form aufweist, als "vertikale Redundanzen" bezeichnet.

Zum Beispiel erzeugt die Verkleinerung um den Faktor 2 in beiden Richtungen vier ähnliche aber nicht identische Bilder, abhängig vom Versatz des Ursprungs, der beispielsweise die Koordinaten (0,0), (0,1), (1,0), (1,1) annehmen kann. Eine einzelne Reduktionspyramide mit 4 Stufen wird auf diese Weise 1 + 4 + 16 + 64 = 85 redundante Bilder erzeugen. Das bedeutet, daß unter bestimmten Umständen ein Objekt bis zu 85 mal markiert wird. Diese Tatsache reduziert die Wahrscheinlichkeit sehr deutlich, daß ein gültiges Objekt wegen des nichtlinearen Charakters des Punktobjektdetektors nicht detektiert werden könnte.

Die unterschiedlichen redundanten Ergebnisse müssen zu einem endgültigen einzelnen Ergebnis für jedes Objekt zusammengefaßt werden. Der Fusionsprozeß wird zuerst für die horizontalen Redundanzen durchgeführt, wobei gemäß Merkmal

h) die horizontalen Redundanzen für jedes markierte Objekt durch horizontale Fusion zu einem einzelnen aus x/y-Koordinaten, Reduktionsstufe und Größe bestehenden Detektionsergebnis für jedes detektierte Objekt "oder-verknüpft" werden. Die horizontale Fusion ist somit eine einfache logische "Oder"-Funktion der Punktobjektdetektor - Ergebnisse, die für eine vertikale Fusion verwendet werden. Hierzu werden von den vom Punktobjektdetektor gelieferten Daten für jedes Ergebnis eine partielle Amplitude gemäß folgender Formel ermittelt:

$$a = S \cdot wch$$

wobei S die oben erwähnte "Größe" des detektierten Objektes und wch eine mit der Reduktionsstufe verbundene Gewichtung ist. Für jede Stufe werden die errechneten Werte für a und ihre Koordinaten als Vektor in einer Liste gespeichert. Diese Vektoren werden "partielle Amplituden-Vektoren" genannt. Für jeden Vektor in der Liste der ersten Stufe werden die entsprechenden partiellen Amplitudenvektoren in den anderen Listen, die sich innerhalb eines "Fusionsradius" befinden, festgestellt und zusammengefaßt. Die verarbeiteten Vektoren werden dann von der Liste gestrichen. Wenn die erste Liste abgearbeitet ist, wird die nächste Liste als Grundlage genommen und der Prozeß wiederholt, bis alle Listen leer sind. Die Fusion selbst ist die Summierung aller partiellen Amplituden innerhalb des Fusionsradius gemäß den Formeln:

$$pf = a_1 + a_2 + \ldots + a_n;$$

$$x_c = 1/n \, (x_1 + x_2 + \ldots + x_n);$$

$$y_c = 1/n \, (y_1 + y_2 + \ldots + y_n);$$

wobei pf die "Fusionspriorität" und $x_c$ und $y_c$ die näherungsweisen Koordinaten des Centroids sind. Der "Fusions"-Radius hängt offensichtlich davon ab, wieviele Stufen man fusionieren will. Dabei gilt folgende Abhängigkeit:

$$rf = 2^{(n-1)} + 2,$$

wobei rf der Fusionsradius und n der größte Reduktionsfaktor ist.

Die auf die obenbeschriebene Weise ermittelte Fusionspriorität pf ist Bestandteil der Gesamtpriorität eines detektierten Objektes. Weitere Prioritäten, die zur Gesamtpriorität eines detektierten Objektes beitragen, sind beispielsweise eine partielle Mehrstufen-Priorität pmch, eine Priorität der strukturierten Gebiete pc oder eine Horizontpriorität ph, deren Bestimmung in den Unteransprüchen 5 bis 11 beschrieben ist. Die Gesamtpriorität für jedes detektierte Objekt wird somit durch algebraisches Aufsummieren aller partiellen Prioritäten nach der Beziehung $p = pf + pmch + pc + phf...$ bestimmt.

i) Abschließend werden die Detektionsergebnisse für die detektierten Objekte in einem Ergebnisspeicher abgespeichert, wobei die detektierten Objekte in Abhängigkeit von zugeordneten Gesamtprioritäten in einer Liste derart geordnet werden, daß oberhalb eines einstellbaren Horizonts liegende detektierte Objekte eine höhere Priorität als unterhalb des Horizonts liegende detektierte Objekte aufweisen.

Die Objekte höherer Priorität können in einem Zielverfolgungsverfahren dazu verwendet werden, um alle signifikanten Objekte in Echtzeit zu verfolgen.

Wenn man die grundlegenden Punktobjektdetekor-Methoden in einem parallelen Kanal, aber mit einem unterschiedlichen Satz von Regeln anwendet, erhält man ein binäres Bild, das benutzt wird, um ein Maß für strukturierte Gebiete im digitalen Originalbild zu errechnen.

Die Regeln für jede der vier Referenzmengen sind:

wenn:  pixel-(Bereich)$_{min}$ > Schwelle
dann:  wird das Pixel markiert,

wobei pixel die Intensität des dem jeweiligen Matrixmittelpunkt entsprechenden Pixels und (Bereich)$_{min}$ die minimale Intensität jeder Referenzmenge ist. Die maximale Schwelle ist üblicherweise niedriger als für die Markierung der möglichen Kandidaten im Punktobjektdetektor. Diese Markierungen werden dann "logisch verodert", um das Binärbild für die Analyse zu erzeugen. Dieses Bild wird dann einem Filter zugeführt, das die vier nächsten horizontalen Nachbarn eines jeden "reduzierten Pixels" aufsummiert. Folglich ergibt sich ein strukturiertes Gebiet cl zu:

$$(cl)_{ij} = (rb)_{ij-2} + (rb)_{ij-1} + (rb)_{ij+1} + (rb)_{ij+2};$$

wobei (rb) das binäre Bild und i,j der Index für die vertikale und die horizontale Richtung ist. Der Maximalwert für dieses Gebiet cl ist deshalb 4, was eine stark strukturierte Nachbarschaft anzeigt. Das Minimum ist 0 und zeigt eine homogene Umgebung an. Für jede Gruppe von 64 Pixeln (8 x 8 Makropixel) im Originalbild gibt es einen Schätzwert für die Gebiets-Stärke. Aus zwei Gründen wird die Filterung nur in horizontaler Richtung durchgeführt. Erstens sind in der Natur mehr horizontale als vertikale Strukturen vorhanden und zweitens wird das strukturierte Gebiet cl später zur Berechnung des Horizonts verwendet.

Um die partielle Priorität in der Verbindung mit dem strukturierten Gebiet zu bestimmen, wird folgende Formel benutzt:

$$pc = B \times cl^2,$$

wobei pc die Priorität des strukturierten Gebietes und B ein Skalierungsfaktor, der mit den übrigen Systemparametern optimiert werden muß, darstellen. Diese Priorität wird später von der Gesamtpriorität abgezogen, um der relativen Bedeutung von Objekten Rechnung zu tragen, die nicht in das strukturierte Gebiet fallen.

Während der horizontalen Filterung können zwei Variable ermittelt werden, die später als Kontrollparameter für die Bestimmung von Schwellwerten dienen. Dies sind die Gesamtzahl aller strukturierten Gebiete $(cl)_{ij}$ mit dem Wert Null und die gesamte Zahl aller strukturierten Gebiete $(cl)_{ij}$, mit dem Wert 4. Diese Kontrollparameter werden N0 und N4 genannt.

Die ermittelten strukturierten Gebiete cl werden wie nachfolgend beschrieben zur Bestimmung der Horizontlage benutzt:

a) Die Gebiets-Werte werden in horizontaler Richtung nach der Formel

$$(hc)_i = (cl)_{i1} + (cl)_{i2} + ... + (cl)_{in,}$$

aufsummiert,
wobei $(hc)_i$ der kumulative Wert des Gebietes in horizontaler Richtung ist;

b) Die in Stufe a ermittelten hc-Werte werden in vertikaler Richtung gefiltert,
wobei sich der gefilterte kumulierte Wert $(hcf)_i$ für jede Reihe ergibt zu

$$(hcf)_i = (hc)_{i-1} + (hc)_i + (hc)_{i+1};$$

c) Ausgehend von der obersten Reihe wird jeder gefilterte kumulierte Wert $(hcf)_i$ mit einer Ober- und Untergrenze verglichen. Wenn $(hcf)_i$ größer als die Obergrenze ist, dann wird als Horizontposition diese Reihe markiert. Wenn $(hcf)_i$ kleiner als die Untergrenze ist, dann wird die zuvor als Horizont markierte Position ignoriert.

Um die partielle Priorität in Bezug zum Horizont festzulegen wird folgende Formel verwendet:

$$ph = Y - H;$$

wobei ph die "Horizont-Priorität", Y die vertikale Koordinate des Kandidaten und H die Horizontposition ist.

In der Zeichnung ist ein Ausführungsbeispiel einer Schaltungsanordnung nach der Erfindung dargestellt, und zwar zeigen:

Fig. 1   ein Blockschaltbild zur automatischen Detektion von festen oder beweglichen Objekten,

Fig. 2   einen Objekt- und Clutter-Detektor gemäß Fig. 1,

Fig. 3   einen Objektprozessor in Blockschaltbildform,

Fig. 4   ein ergänzendes Blockschaltbild zum Objektprozessor gemäß Fig. 3, und

Fig. 5   einen Clutterprozessor im Blockschaltbild.

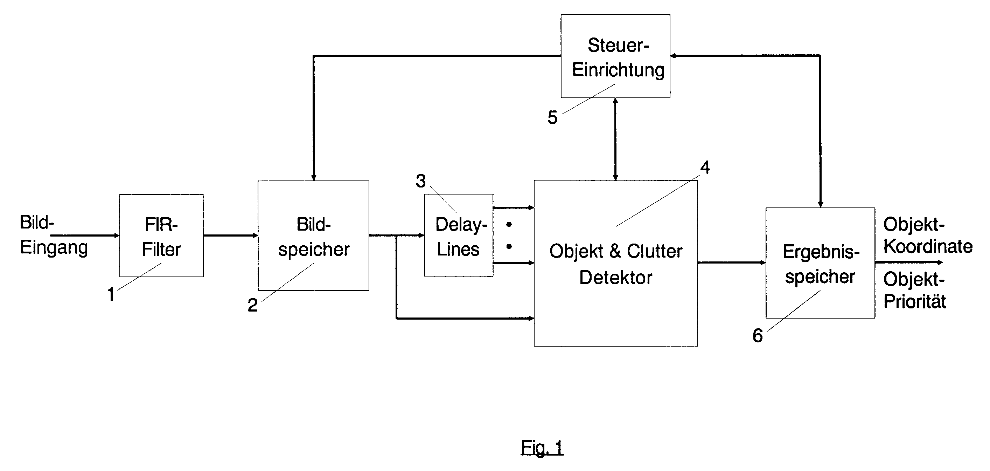

In Fig. 1 ist ein FIR-Filter 1, vorzugsweise ein 3 x 3 FIR-Filter vorgesehen, dem über seinen Bildeingang das digitalisierte Bildsignal eines zeichnerisch nicht dargestellten optronischen Sensors zugeführt wird. Der geglättete Bilddatenstrom wird kontinuierlich in einem vorzugsweise im Tandembetrieb arbeitenden Bildspeicher 2 abgespeichert, wobei die Pixel der gefilterten Bilder einer Echtzeitbildfolge von einer Steuereinrichtung 5 adressiert werden. Als Steuereinrichtung 5 kann z. B. ein Mikroprozessor oder ein digitaler Signalprozessor mit einem Adreßgenerator für den Bildspeicher 2 vorgesehen sein. Nachdem ein Bild der Echtzeitbildfolge in den Speicher eingelesen ist, wird es über eine Zeitverzögerungsschaltung 3, beispielsweise einem 7-Zeilen-Verzögerungsblock mit Verzögerungsleitungen von der Länge einer Spalte des digitalisierten Bildes einem Objekt- und Clutter-Detektor 4 zu Bearbeitung zugeführt, der seine hierfür erforderlichen Schwellwerte von der Steuereinrichtung 5 in Abhängigkeit von Zwischenergebnissen des Objekt- und Clutter-Detektors 4 aus dem vorangegangenen Bild erhält. Hierbei erfolgt die Bearbeitung in Abhängigkeit von der erwarteten Objektgröße mehrmals sequentiell. Soll beispielsweise ein digitales Bild einer Echtzeitbildfolge um jeweils einen Reduktionsfaktor 2 bis zu einem Reduktionsfaktor n analysiert werden, so sind insgesamt n+1 Bearbeitungsdurchläufe erforderlich, wobei das im Bildspeicher 2 abgespeicherte Bild pixelweise dem jeweiligen Reduktionsfaktor entsprechend adressiert wird. Die von dem Objekt- und Clutter-Detektor gelieferten Ergebnisse, nämlich die Koordinaten und Prioritäten der detektierten Objekte, werden in einem Ergebnisspeicher 6 für jeden Bearbeitungsdurchlauf abgespeichert und anschließend mit Hilfe der Steuereinrichtung 5 horizontal und vertikal in untenstehender Weise fusioniert. Die Koordinaten und Prioritäten der detektierten Objekte können zwecks weiterer Bearbeitung, z. B. zur Spurbildung, dem Ergebnisspeicher 6 entnommen werden.

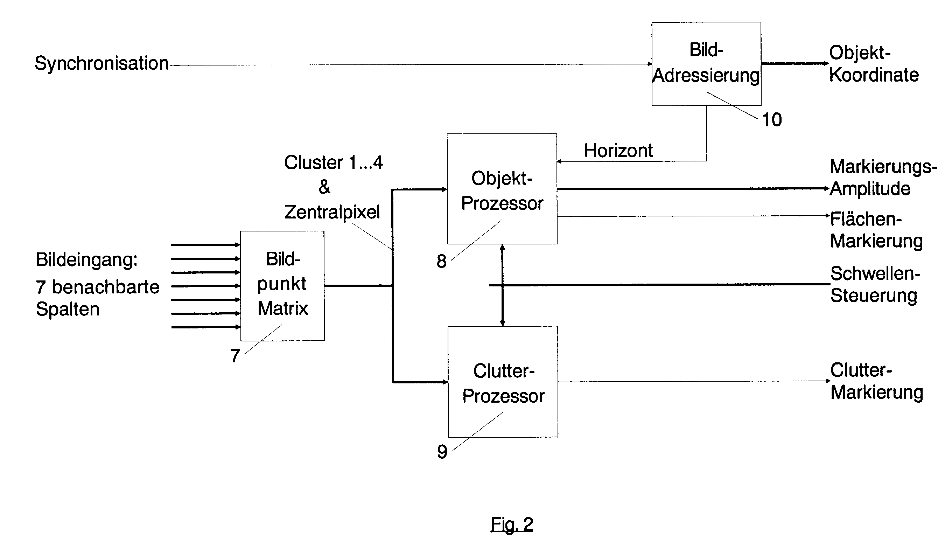

Der in Fig. 2 dargestellte Objekt- und Clutter-Detektor weist einen Objektprozessor 8, dessen Ausgang die Objektmarkierung mit Markierungsamplitude sowie ein Binärbild zur Flächenmarkierung liefert, und einen Clutter-Prozessor 9 zur Markierung von strukturierten Gebieten, d. h. zur Markierung von zu strukturierten Gebieten gehörenden Bildpunkten, auf. Weiterhin ist eine Einrichtung zur Bildadressierung 10 vorgesehen, die die Schwellensätze des Objektprozessors 8 in Abhängigkeit von der oben erläuterten und ermittelten Lage des Horizonts steuert und die Objektkoordinaten an ihrem Ausgang bereitstellt. Den Eingängen des Objektprozessors 8 und des Clutterprozessors 9 ist eine Bildpunkt-Matrix 7 vorgeschaltet, die den aus sieben benachbarten Spalten bestehenden Bilddatenstrom mit vier mehrere Pixel enthaltenden Matrizen abtastet. Jeder Matrix wird eine Referenzmenge außerhalb des zugehörigen Matrixmittelpunktes vorgegeben, wobei die Referenzmengen jeder Matrix sich voneinander unterscheiden. Beispielsweise können sie dreieckförmig ausgebildet sein und an den vier Ecken einer 7 x 7 großen quadratischen Matrix angeordnet sein.

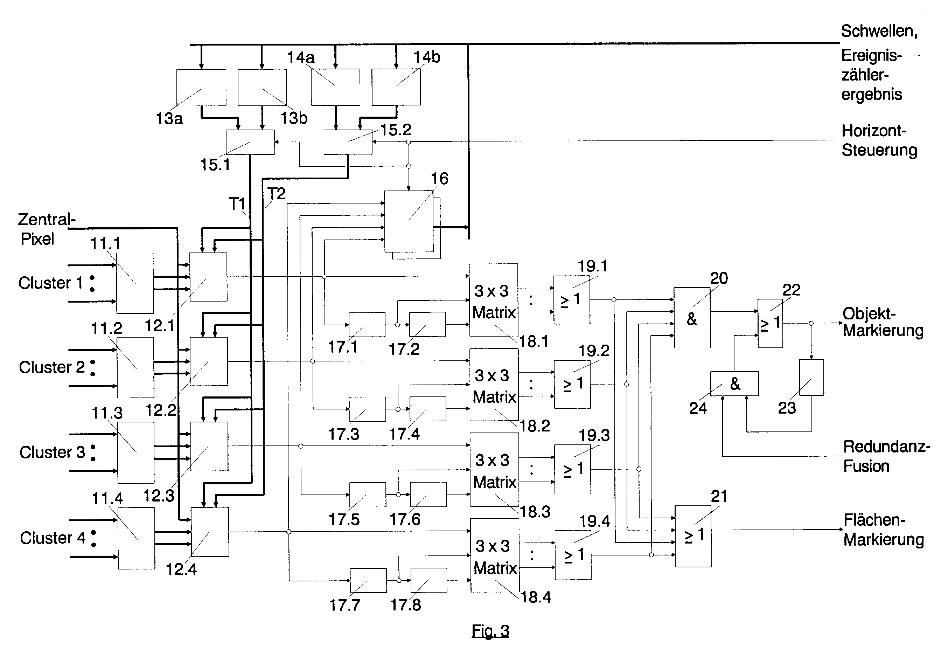

Der in Fig. 3 dargestellte Objekt-Prozessor weist vier parallel angeordnete Maximum-Minimum Filter 11.1 bis 11.4 auf, deren Eingänge mit dem Ausgang der Bildpunkt-Matrix 7 verbunden sind und denen jeweils eine Matrix mit zugehörender Referenzmenge (Cluster 1 bis 4) zugeführt werden. Jedem Filter 11.1 bis 11.4 ist jeweils ein Regelprozessor 12.1 bis 12.4 nachgeordnet, wobei jedem Regelprozessor 12.1 bis 12.4 auch das dem jeweiligen Matrixmittelpunkt entsprechende Pixel sowie von jeweils einer Auswahlschwelle 15.1 und 15.2 zwei Schwellwerte T1 und T2 zugeführt werden. Mittels der Filter 11.1 bis 11.4 und der Regelprozessoren 12.1 bis 12.4 werden von jeder Referenzmenge das Maximum und Minimum der Helligkeitswerte ermittelt. Das dem jeweiligen Matrixmittelpunkt entsprechende Pixel wird dann markiert, wenn erstens dieses Pixel um einen ersten Schwellwert heller als das Maximum der Helligkeitswerte der zugehörigen Referenzmenge ist und zweitens wenn die Streuung der zugehörigen Referenzmenge kleiner als ein weiterer fester Schwellwert ist, wobei als Maß für die Streuung der Helligkeitswerte hier die Differenz von Maximum und Minimum verwendet wird.

Die Ausgänge der Regelprozessoren 12.1 bis 12.4 sind an einen Ereigniszähler 16 und jeweils direkt an einen ersten Eingang von vier Matrizen 18.1 bis 18.4 angeschlossen, wobei die zweiten Eingänge der Matrizen 18.1 bis 18.4 über jeweils eine Verzögerungsleitung 17.1, 17.3, 17.5 und 17.7 und die dritten Eingänge der Matrizen 18.1 bis 18.4 über zwei in Serie geschaltete Verzögerungsleitungen 17.1, 17.2 bis 17.7, 17.8 mit dem Ausgang des zugeordneten Regelprozessors 12.1 bis 12.4 in Verbindung stehen. Den Matrizen 18.1 bis 18.4 sind jeweils einer von vier Oder-Verknüpfungsgliedern 19.1 bis 19.4 nachgeordnet, deren Ausgänge an jeweils einen Eingang eines UND-Verknüpfungsgliedes 20 angeschlossen sind. Mittels dieser Bauelemente wird die Anzahl der markierten Pixel des digitalen Bildes (Zwischenergebnisse) für ein Bild bestimmt, und es werden die aktuellen Zählergebnisse mit einer oberen und unteren festen Schranke verglichen und zur Regelung der jeweiligen ersten Schwellwerte verwendet. Weiterhin werden die benachbarten Pixel jedes markierten Pixels des digitalen Bildes markiert, so daß alle markierten Pixel eine dilatierte Menge bilden. Anschließend werden die aus einer Referenzmenge gewonnenen dilatierten Mengenelemente mit den anderen jeweils aus einer Referenzmenge hervorgegangenen dilatierten Mengenelementen UND-verknüpft.

Die Ausgänge der Oder-Verknüpfungsglieder 19.1 bis 19.4 sind auch an die Eingänge eines Oder-Verknüpfungsgliedes 21 zur Erzeugung von Binärbildern zur Flächenmarkierung von strukturierten Gebieten angeschlossen, die in den digitalen Bildern der Echtzeitbildfolge enthalten sind. Weiterhin ist an den Ausgängen des Und-Verknüpfungsgliedes 20, welches den Oder-Verknüpfungsglieder 19.1 bis 19.4 nachgeordnet ist ein drittes Oder-Verknüpfungsglied 22 für die Fusion der horizontalen Redundanzen angeschlossen, wobei der zweite Eingang dieses Odergliedes 22 an den Ausgang eines Undgliedes 24 zur Steuerung der horizontalen Redundanzfusion geführt ist. Hierzu stehen an den Eingängen des Undgliedes 24 die Redundanzfusion und über eine Verzögerungsleitung 23 von einer Länge $L = M/K_v$, wobei M die Anzahl der Bildpunkte einer Spalte des digitalen Bildes und $K_v$ einen vertikalen Reduktionsfaktor bezeichnen, die von dem Oder-Verknüpfungsglied 22 ausgegebene Objektmarkierung für jedes in einem digitalen Bild einer Echtzeitbildfolge markierte Objekt an.

Zur Einstellung des Horizonts, der zur Unterscheidung von detektierten Objekten mit einer höheren Priorität von denjenigen Objekten mit einer niedrigen Priorität herangezogen wird, weist die Schaltungsanordnung gemäß Fig. 3 insgesamt vier Schwellwertspeicher 13a, 13b sowie 14a, 14b auf, deren Eingängen die von dem Ereigniszähler 16 ermittelten Schwellen zugeführt werden und von denen zwei jeweils einen Schwellwertsatz 13a und 13b bzw. 14a und 14b bilden. Hierbei sind Speicher 13a für die Schwelle T1 über dem Horizont, Speicher 13b für die Schwelle T1 unter dem Horizont, Speicher 14a für die Schwelle T2 über dem Horizont und Speicher 14b für die Schwelle T2 unter dem Horizont vorgesehen. Jedem Schwellwertsatz ist eine Auswahlschwelle 15.1 bzw. 15.2 nachgeordnet, die von einem Horizontsteuer-Signal angesteuert werden, welches gleichzeitig dem Steuereingang des Ereigniszählers 16 zugeführt wird. Die von den Auswahlschwellen 15.1 und 15.2 erzeugten Schwellwerte T1 und T2 stehen an den Schwellwerteingängen der Regelprozessoren 12.1 bis 12.4 an, wobei das die Auswahlschwellen 15.1 und 15.2 ansteuernde Horizontsteuer-Signal eine Schwellenumschaltung durch die beispielsweise aus markierten strukturierten Gebieten ermittelte Lage des Horizonts aktiviert werden kann (Horizont-Steuerung). Der doppelte Satz von Schwellen und Ereigniszählern ermöglicht eine bessere Anpassung der Detektionsempfindlichkeit an ein aktuelles Bildszenario.

Für Objektdetektion mit Reduktionsfaktoren größer als 1 besteht die Möglichkeit, die horizontalen Redundanzen während der Bearbeitung ("Online") zu fusionieren. Dazu wird die Länge der Verzögerungsleitungen 3 aus Fig. 1 und 17i aus Fig. 3 entsprechend dem Redukionsfaktor 1 gewählt (j = 1....8). Die Länge der Verzögerungsleitung 23 entspricht der um den aktuellen Reduktionsfaktor reduzierten Anzahl von Bildpunkten innerhalb einer Spalte. Der Bildspeicher 2 wird mit Hilfe der Steuereinrichtung 5 so adressiert, daß in horizontaler Richtung der Reduktionsfaktor 1 ist. Die UND-Verknüpfung 21 in dem Undverknüpfungsglied 24 wird von der Steuereinrichtung 5 derart gesteuert (Redundanzfusion), daß die um eine Spalte verzögerten Objektmarkierungen aus der Verzögerungsleitung 23 mit den aktuellen Markierungen mittels des ODER-Verknüpfungsgliedes 22 fusionieren. Die so fusionierten Markierungen werden wiederum in die Verzögerungsleitung 23 eingespeist, bis alle Redundanzen fusioniert sind. Sei N die Anzahl der Spalten des Bildes, $K_h$ der horizontale Reduktionsfaktor, Z die erste zu bearbeitende Spalte und m die aktuelle Spaltennummer, dann gilt:

Redundanzfusion = 0 für alle $m = Z + n*K_h$, mit $n = 0...N/K_h$);

Redundanzfusion = 1 in den übrigen Fällen.

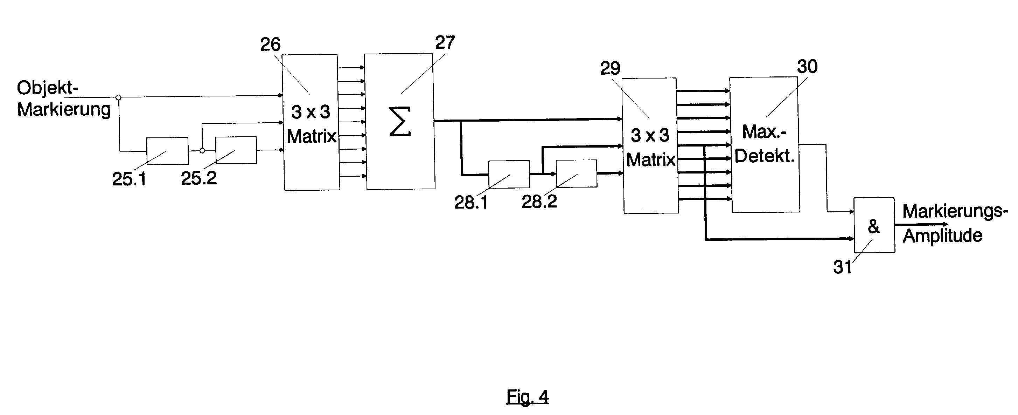

Ein Objekt, das nach dem beschriebenen Verfahren detektiert wird, erzeugt im binären Bildstrom je nach Größe mehrere Markierungen. Die zusätzlichen Markierungen wirken sich für eine weitere Verarbeitung störend aus und müssen deshalb unterdrückt werden. Dazu wird für jede Objektmarkierung eine Markierungsamplitude berechnet, wobei nur diejenige als Ergebnis größer Null ausgegeben wird, die im Zentrum einer 3 x 3-Umgebung ein Maximum bildet. Wie aus Fig. 4 zu ersehen ist, sind, zur Weiterverarbeitung des Binärbildes der Objektmarkierung an dem Ausgang des ODER-Verknüpfungsgliedes 22 ein Eingang der Matrix 26, ein zweiter Eingang der Matrix 26 über eine Verzögerungsleitung 25.1 von der Länge der Spalte eines digitalen Bildes sowie ein dritter Eingang der Matrix 26 über zwei in Serie geschaltete Verzögerungsleitungen 25.1 und 25.2 jeweils von der Länge der Spalte eines digitalen Bildes angeschlossen. Die Ausgänge der Matrix 26 stehen mit den Eingängen eines Summiergliedes 27 zur Berechnung der Markierungsamplituden in Verbindung. Dem Summierglied 27 sind zwei weitere in Reihe geschaltete Verzögerungsleitungen 28.1, 28.2, eine Matrix 29 zur Bereitstellung der Markierungsamplituden, für einen Maximumdetektor 30 zur Markierung des Amplituden-Maximums und ein Und-Verknüpfungsglied 31 zur Unterdrückung der Amplituden, die kein Maximum darstellen, und zur Ausgabe der Markierungsamplitude nachgeordnet.

Die Verzögerungsleitungen 25.1 und 25.2 verzögern das Binärbild der Objektmarkierungen um jeweils eine Spalte, so daß für jeden zu bearbeitenden Bildpunkt am Ausgang der 3 x 3-Matrix 26 das Zentrum mit den 8 Nachbarn gleichzeitig zur Verfügung stehen. Das Summierglied 27 bildet für jeden Bildpunkt i die Summe für diese neun Bits:

$$y_i = x1 + x2 + ... + x9.$$

Die Werte $y_i$ werden mittels der Verzögerungsleitungen 28.1 und 28.2 mit jeweiliger Spaltenlänge m und der 3 x 3-Matrix 29 wie folgt aufbereitet:

$$y_{i-1-m} y_{i-1} y_{i-1+m}$$

$$y_{i-m} y_i y_{i+m}$$

$$y_{i+1-m} y_{i+1} y_{i+1+m}.$$

Der Wert $y_i$ wird mit Hilfe des Maximumdetektors 30 und des UND-Verknüpfungsgliedes 31 als Markierungsamplitude größer Null ausgegeben, wenn folgende Bedingungen gleichzeitig erfüllt sind:

(a) $y_i \geq y_{i-1+m}$, (b) $y_i \geq y_{i+m}$, (c) $y_i \geq y_{i+1}$, (d) $y_i \geq y_{i+1+m}$, (e) $y_i > y_{i-1-m}$, (f) $y_i > y_{i-1}$, (g) $y_i > y_{i-m}$, (h) $y_i > y_{i+1-m}$.

Ist eine der Bedingungen (a) bis (h) nicht erfüllt, wird dem zugehörigen Bildpunkt die Markierungsamplitude Null zugewiesen.

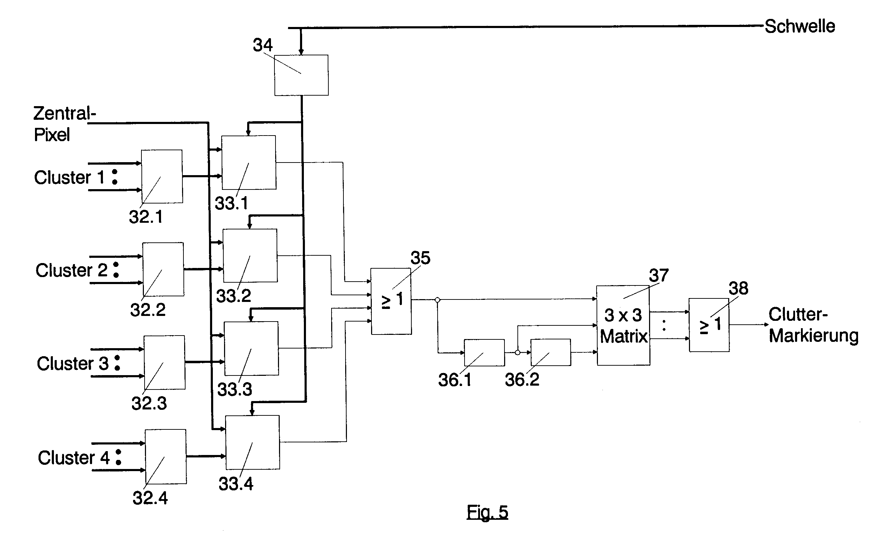

In Fig. 5 ist der der Bildpunkt-Matrix 7 aus Fig. 2 nachgeordnete Clutter-Prozessor 9 des Objekt-Clutter-Detektors 4 dargestellt. Der Clutter-Prozessor 9 weist eine der untersuchten Zahl von Referenzmengen entsprechende Anzahl von parallel angeordneten Minimum-Filtern 32.1 bis 32.4 auf, die die Minima der Helligkeitswerte von zugehörigen strukturierten Gebieten ermitteln. Die Ausgänge der Minimum-Filter 32.1 bis 32.4 sind an die ersten Eingänge von jeweils einem nachgeordneten Regelprozessor 33.1 bis 33.4 angeschlossen, an deren zweiten Eingängen jeweils die den jeweiligen Matrixmittelpunkten entsprechenden Pixel anstehen und an deren dritten Eingängen der Ausgang eines Schwellwertspeichers 34 angeschlossen ist. Die Ausgänge der Regelprozessoren 33.1 bis 33.4 sind mit den Eingängen eines Oder-Verknüpfungsgliedes 35 verbunden, welches die markierten Pixel der strukturierten Gebiete zur Erzeugung eines Binärbildes fusioniert. Dem Oder-Verknüpfungsglied 35 sind zwei in Serie geschaltete Verzögerungsleitungen 36.1 bis 36.2 jeweils von der Länge einer Spalte des digitalen Bildes und eine Matrix 37, die zusammen mit dem ODER-Verknüpfungsglied 38 eine Dilatation des Binärbildes in horizontaler und vertikaler Richtung zur Markierung der strukturierten Gebiete ermögicht, nachgeordnet.

Für jedes Gebiet j (j = 1...4) wird mit Hilfe der nichtlinearen Filter 32.j das Minimum $Min_j$ bestimmt und in den Regelprozessoren 33j mit der Intensität des dem jeweiligen Matrixmittelpunkt entsprechenden Pixels verglichen. Das Zentralpixel wird als zu einem strukturierten Gebiet gehörend markiert, wenn folgende Bedingung gilt:

$$Pix - Min_j > Schwelle.$$

Die resultierenden Markierungen für j = 1...4 werden mit Hilfe des ODER-Verknüpfungsgliedes 35 über alle j fusioniert. Im Anschluß daran wird mittels der Verzögerungsleitungen 36.1 und 36.2, der 3 x 3-Matrix 37 und des ODER-Verknüpfungsgliedes 38 die Markierung eines Bildpunktes auf eine Fläche der Größe 3 x 3 Bildpunkte ausgedehnt. Damit wird erreicht, daß bei einer Unterabtastung des Binärbildes (Markierung der strukturierten Gebiete) mit dem Faktor 8 in horizontaler und vertikaler Richtung genügend Information für die in Software realisierte Analyse der strukturierten Gebiete erhalten bleibt.

**Patentansprüche**

1. Verfahren zur automatischen Detektion von festen oder beweglichen Objekten in natürlicher Umgebung einer Echtzeitbildfolge unter Verwendung eines die Umgebung abtastenden elektrooptischen Sensors mit nachgeordneter Auswerteeinheit und gegebenenfalls vorgesehener Bilddarstellungseinrichtung mit folgenden Verfahrensschritten:

a) ein von dem Sensor geliefertes digitales Bild wird von mindestens drei jeweils mehrere Pixel enthaltenden Matrizen abgetastet, wobei jeder Matrix eine Referenzmenge außerhalb des zugehörigen Matrixmittelpunktes vorgegeben wird und wobei die Referenzmengen jeder Matrix sich voneinander unterscheiden,

b) von jeder Referenzmenge werden das Maximum und Minimum der Helligkeitswerte ermittelt,

c) das dem jeweiligen Matrixmittelpunkt entsprechende Pixel wird dann markiert, wenn erstens dieses Pixel um einen ersten Schwellwert heller als das Maximum der Helligkeitswerte der zugehörigen Referenzmenge ist und zweitens wenn die Streuung der zugehörigen Referenzmenge kleiner als ein weiterer fester Schwellwert ist, wobei als Maß für die Streuung der Helligkeitswerte hier die Differenz von Maximum und Minimum verwendet wird,

d) die Anzahl der Zwischenergebnisse nämlich der markierten Pixel des digitalen Bildes wird für ein Bild bestimmt, und es werden die aktuellen Zählergebnisse mit einer oberen und unteren festen Schranke verglichen und zur Regelung der jeweiligen ersten Schwellwerte derart verwendet,

- daß der erste Schwellwert erhöht wird, wenn die aktuellen Zählergebnisse größer als die obere Schranke sind,
- daß der erste Schwellwert erniedrigt wird, wenn die aktuellen Zählergebnisse kleiner als die untere Schranke sind, und
- daß der erste Schwellwert unverändert bleibt, wenn die aktuellen Zählergebnisse innerhalb des von der oberen und unteren vorgegebenen Schranke definierten Bereiches liegen oder gleich der unteren bzw.

oberen Schranke sind, und

e) die benachbarten Pixel jedes markierten Pixels des digitalen Bildes werden markiert, so daß alle markierten Pixel eine dilatierte Menge bilden, und es werden die aus einer Referenzmenge gewonnenen dilatierten Mengenelemente mit den anderen jeweils aus einer Referenzmenge hervorgegangenen dilatierten Mengenelementen UND-verknüpft, gekennzeichnet durch folgende weitere Verfahrensschritte:

f) in mindestens einer ersten von n, eine Reduktionspyramide bildenden Reduktionsstufen wird das von dem Sensor gelieferte digitale Bild um den Faktor $2^n$ zur Erzeugung von digitalen Teilbildern verkleinert, deren Anzahl in x- und y-Richtung des digitalen Bildes jeweils dem Verkleinerungsfaktor $2^n$ der zugehörigen Reduktionsstufe n entspricht,

g) für jedes erzeugte digitale Teilbild einer zugehörigen Reduktionsstufe werden nacheinander die Verfahrensschritte a bis e durchgeführt, wobei die "und-verknüpften" dilatierten Mengenelemente jedes digitalen Teilbildes ein Teilendergebnis nämlich jeweils eine ein detektiertes Objekt darstellende Ergebnismenge in einer zugehörigen Reduktionsstufe der Reduktionspyramide bilden, und wobei als weitere Teilendergebnisse redundante Ergebnismengen von unterschiedlichen Reduktionsstufen, die jeweils dasselbe Objekt in verschiedenen ähnlichen Teilbildern markieren, "horizontale Redundanzen" sowie redundante Ergebnismengen der unterschiedlichen Reduktionsstufen, die jeweils dasselbe Objekt markieren, wenn dieses eine vorgegebene Intensitätsverteilung in Größe und Form aufweist, "vertikale Redundanzen" bilden,

h) die horizontalen Redundanzen für jedes markierte Objekt werden durch horizontale Fusion zu einem einzelnen aus x/y-Koordinaten, Reduktionsstufe und Größe bestehenden Detektionsergebnis für jedes detektierte Objekt "oder-verknüpft", und

i) die Detektionsergebnisse für die detektierten Objekte werden in einem Ergebnisspeicher (6) abgespeichert, wobei die detektierten Objekte in Abhängigkeit von zugeordneten Gesamtprioritäten in einer Liste derart geordnet werden, daß oberhalb eines einstellbaren Horizonts liegende detektierte Objekte eine höhere Priorität als unterhalb des Horizonts liegende detektierte Objekte aufweisen.

**2.** Verfahren nach Anspruch 1, dadurch gekennzeichnet, daß die Objekte höherer Priorität in einem Zielverfolgungsverfahren dazu verwendet werden, um alle signifikanten Objekte in Echtzeit zu verfolgen.

**3.** Verfahren nach Anspruch 1, dadurch gekennzeichnet, daß

- für die Detektionsergebnisse jedes detektierten Objektes eine partielle Amplitude a gemäß der Formel a = S * wch ermittelt wird, wobei S die Größe des zugehörigen Objektes und wch einen von der Reduktionsstufe abhängigen Gewichtungsfaktor darstellen,
- für jede Reduktionsstufe die ermittelten partiellen Amplituden a und die zugehörigen Koordinatenwerte als Vektoren in jeweils einer Liste als partielle Amplituden-Vektoren gespeichert werden,
- für alle partiellen Amplituden-Vektoren einer jeden Liste die innerhalb eines Fusionsradius befindlichen partiellen Amplituden-Vektoren anderer Listen festgestellt und zusammengefaßt werden, und daß
- für jedes detektierte Objekt seine zur Gesamtpriorität beitragende Fusionspriorität durch Summierung aller zugehörender partieller Amplituden innerhalb des Fusionskreises ermittelt wird.

**4.** Verfahren nach Anspruch 3, dadurch gekennzeichnet, daß der durch die Anzahl der zu fusionierenden Reduktionsstufen bestimmte Fusionsradius rf in Abhängigkeit von der größten Reduktionsstufe n nach der Formel $rf = 2^{(n+1)} + 2$ ermittelt wird.

**5.** Verfahren nach Anspruch 1, dadurch gekennzeichnet, daß eine zur Gesamtpriorität eines detektierten Objektes beitragende partielle Mehrstufen-Priorität pmch nach der Formel pmch = A x total-ch bestimmt wird, wobei A ein Skalierungsfaktor ist und total-ch die Gesamtzahl der Reduktionsstufen angibt, in denen das detektierte Objekt markiert und gegebenenfalls als Objektcharakteristik in einer Objektliste abgespeichert wird.

**6.** Verfahren nach Anspruch 1, dadurch gekennzeichnet, daß in einem Clutter-Prozessor (9) ein Maß für strukturierte Gebiete jeder Matrix des vom Sensor gelieferten digitalen Bildes derart bestimmt wird, daß ein dem jeweiligen Matrixmittelpunkt entsprechendes Pixel dann markiert wird, wenn die Differenz zwischen der Intensität dieses Pixels und des Intensitätsminimums jeder Referenzmenge größer als ein vorgegebener Schwellwert ist, daß die Markierungen zur Erzeugung eines Binärbildes durch eine "Oder-Verknüpfung" fusioniert werden, daß das Binärbild einem Filter zur Aufsummierung eines jeden Pixels durch die vier nächsten horizontal benachbarten Pixel zugeführt wird, und daß die strukturierten Gebiete cl nach der Formel
$$(cl)_{ij} = (rb)_{ij-2} + (rb)_{ij-1} + (rb)_{ij+1} + (rb)_{ij+2}$$
bestimmt werden, wobei (rb) das Binärbild und i,j den Index für die vertikale und die horizontale Richtung angeben.

**7.** Verfahren nach Anspruch 6, dadurch gekennzeichnet, daß eine von der Gesamtpriorität eines detektierten Objektes abzuziehende Priorität pc der strukturierten Gebiete cl nach der Beziehung $pc = B \times cl^2$ bestimmt wird, wobei B ein mit den übrigen Systemparametern zu optimierender Skalierungsfaktor ist.

**8.** Verfahren nach Anspruch 6, dadurch gekennzeichnet, daß während der horizontalen Filterung des Binärbildes zwei als Kontrollparameter für die Bestimmung von zwei Schwellen für die strukturierten Gebiete cl dienende Variable bestimmt werden.

**9.** Verfahren nach Anspruch 8, dadurch gekennzeichnet, daß die Variablen (N0, N4) aus den Gesamtzahlen aller strukturierten Gebiete mit den Werten Null bzw. mit den Werten 4 bestimmt werden.

**10.** Verfahren nach Anspruch 1, 6, 7, 8 oder 9, dadurch gekennzeichnet, daß die strukturierten Gebiete cl zur Bestimmung des einstellbaren Horizonts derart verwendet werden, daß

- durch Aufsummieren der Werte der strukurierten Gebiete in horizontaler Richtung ein kumulativer Wert eines strukturierten Gebietes $(hc)_i$ in horizontaler Richtung nach der Beziehung $(hc)_i = (cl)_{i1} + (cl)_{i2} + .... + (cl)_{in}$ bestimmt wird,
- die kumulativen Werte der strukturierten Gebiete $(hc)_i$ in vertikaler Richtung gefiltert werden, wobei der gefilterte kumulierte Wert für jede Reihe $(hcf)_i = (hc)_{i-1} + (hc)_i + (hc)_{i+1}$ ist, und daß
- ausgehend von der obersten Reihe jeder gefilterte kumulierte Wert $(hcf)_i$ mit einer Ober- und Untergrenze derart verglichen wird, daß als Horizontposition eine Reihe markiert wird, wenn der gefilterte kumulierte Wert $(hcf)_i$ dieser Reihe größer als die Obergrenze ist, und daß die alte Horizontposition ignoriert wird, wenn der gefilterte kumulierte Wert $(hcf)_i$ einer Reihe kleiner als die Untergrenze ist.

**11.** Verfahren nach Anspruch 10, dadurch gekennzeichnet, daß die partielle Horizont-Priorität ph

nach der Formel ph = y-H bestimmt wird, wobei y die vertikale Koordinate eines detektierten Objektes und H die Horizontposition darstellen.

12. Verfahren nach einem der Ansprüche 1 bis 11, dadurch gekennzeichnet, daß die Gesamtpriorität p für jedes detektierte Objekt durch algebraisches Aufsummieren aller partiellen Prioritäten nach der Beziehung p = pf + pmch + pc + ph + ... bestimmt wird.

13. Schaltungsanordnung zur Durchführung des Verfahrens nach einem der Ansprüche 1 bis 12 unter Verwendung eines die Umgebung abtastenden elektrooptischen Sensors mit nachgeordneter Auswerteeinheit und gegebenenfalls vorgesehener Bilddarstellungseinrichtung, wobei dem optoelektronischen Sensor ein Vorfilter (1), eine Zeitverzögerungsschaltung (3) und eine der untersuchten Zahl von Referenzmengen entsprechende Anzahl von parallel angeordneten Maximum-Minimum-Filtern (11.1 bis 11.4) nachgeordnet ist, die die Maxima und Minima der Helligkeitswerte der zugehörigen Referenzmengen ermitteln, wobei die Ausgänge der Maximum-Minimum-Filter (11.1 bis 11.4) an die Eingänge von jeweils einem nachgeordneten Regelprozessor (12.1 bis 12.4) zur Ermittlung der Anzahl der markierten Pixel des digitalen Bildes als Zwischenergebnisse angeschlossen sind, deren Ausgänge einerseits an jeweils einen Eingang eines Ereigniszählers (16) zur Bestimmung der aktuellen Zählergebnisse zwecks Vergleich der aktuellen Zählergebnisse mit einer oberen und unteren festen Schranke und zur Regelung der jeweiligen ersten Schwellwerte in den Regelprozessoren (12.1 bis 12.4) und andererseits an die Eingänge von jeweils einem von vier Matrizen (18.1 bis 18.4) zur Erweiterung d.h. Dilatation der den jeweiligen Matrixmittelpunkten entsprechenden markierten Pixel um markierte Nachbarschaftspixel zu dilatierten Mengenelementen und zur UND-Verknüpfung der dilatierten Mengenelemente einer Referenzmenge mit den aus einer anderen Referenzmenge gewonnenen Mengenelementen angeschlossen sind, dadurch gekennzeichnet,

- daß dem elektrooptischen Sensor eine Bildpunkt-Matrix (7) nachgeordnet ist, die den aus sieben benachbarten Spalten bestehenden Bilddatenstrom zu vier Referenzmengen mit einem dem jeweiligen Matrixmittelpunkt entsprechenden Pixel aufbereitet,
- daß zwischen dem Vorfilter (1) und der Zeitverzögerungsschaltung (3) ein Bildspeicher (2) zur Abspeicherung jedes vom optoelektronischen Sensor bereitgestellten und mindestens drei Referenzmengen aufweisenden digitalen Bildes einer Echtzeitbildfolge angeordnet ist,

- daß der Zeitverzögerungsschaltung (3) ein Objekt- und Clutter-Detektor (4) nachgeordnet ist, dessen Objektprozessor neben den Maximum-Minimum-Filtern (11.1 bis 11.4), den Regelprozessoren (12.1 bis 12.4), dem Ereigniszähler (16), den Matrizen (18.1 bis 18.4) und dem Und-Verknüpfungsglied (20) auch vier den Matrizen (18.1 bis 18.4) nachgeordnete Oder-Verknüpfungsglieder für die Dilatation (19.1 bis 19.4), deren Ausgänge an die Eingänge des Und-Verknüpfungsgliedes (20) und eines zweiten Oder-Verknüpfungsgliedes (21) zur Erzeugung von Binärbildern für Flächenmarkierungen der strukturierten Gebiete angeschlossen sind, sowie ein an das Und-Verknüpfungsglied (20) angeschlossenes drittes Oder-Verknüpfungsglied (22) für die Fusion der horizontalen Redundanzen, an dessen Ausgang die Objektmarkierungen als Binärbild anstehen und dessen zweiter Eingang an den Ausgang eines Undgliedes (24) zur Steuerung der horizontalen Redundanzfusion angeschlossen ist, aufweist,
- und daß dem Objekt- und Clutter-Detektor (4) ein Ergebnisspeicher (6) nachgeordnet ist zur Speicherung der Koordinaten und Prioritäten der detektierten Objekte sowie als Zwischenspeicher zur Berechnung der Objekt-Koordinaten und -Prioritäten mittels einer Steuereinrichtung (5), die die im Bildspeicher (2) eingelesenen digitalen Bilder pixelweise adressiert und zwei Schwellensätze des Objektprozessors in Abhängigkeit von der ermittelten Lage des Horizonts steuert.

14. Schaltungsanordnung nach Anspruch 13, dadurch gekennzeichnet, daß die Schwellensätze jeweils einen Schwellwertspeicher (13a, 13b bzw. 14a, 14b) zur Abspeicherung von einem über dem Horizont liegenden Schwellwert und von einem unter dem Horizont liegenden Schwellwert (T1 bzw. T2) aufweisen, und daß den Schwellwertspeichern (13a, 13b bzw. 14a, 14b) jedes Schwellwertsatzes eine Auswahlschwelle (15.1 bzw. 15.2) nachgeordnet sind, deren Ausgänge an die Schwellwerteingänge der Regelprozessoren (12.1 bis 12.4) angeschlossen sind.

15. Schaltungsanordnung nach Anspruch 13, gekennzeichnet durch jeweils zwei hintereinandergeschaltete Verzögerungsleitungen (17.1 bis 17.8) der Länge einer Spalte des digitalen Bildes einer Echtzeitbildfolge, wobei jeweils eine Verzögerungsleitung (17.1, 17.3, 17.5 bzw. 17.7) an jeweils einen zweiten Eingang und die seriellen Verzögerungsleitungen (17.1, 17.2; 17.3, 17.4; 17.5, 17.6 bzw. 17.7, 17.8) an jeweils einen dritten Eingang der Matrizen (18.1 bis 18.4) angeschlossen sind.

**16.** Schaltungsanordnung nach Anspruch 13, dadurch gekennzeichnet, daß zur Weiterverarbeitung des Binärbildes der Objektmarkierung an dem Ausgang des Oder-Verknüpfungsgliedes (22) ein Eingang einer Matrix (26), ein zweiter Eingang der Matrix (26) über eine Verzögerungsleitung (25.1) von der Länge der Spalte eines digitalen Bildes sowie ein dritter Eingang der Matrix (26) über zwei in Serie geschaltete Verzögerungsleitungen (25.1 und 25.2) jeweils von der Länge der Spalte eines digitalen Bildes angeschlossen sind, daß die Ausgänge der Matrix (26) mit den Eingängen eines Summiergliedes (27) zur Berechnung der Markierungsamplituden in Verbindung stehen, daß dem Summierglied (27) zwei weitere in Reihe geschaltete Verzögerungsleitungen (28.1, 28.2), eine Matrix (29) zur Bereitstellung der Markierungsamplituden für einen Maximumdetektor(30) zur Markierung des Amplituden-Maximums und ein Und-Verknüpfungsglied (31) zur Unterdrückung der Amplituden, die kein Maximum darstellen, und zur Ausgabe der Markierungsamplitude nachgeordnet sind.

**17.** Schaltungsanordnung nach Anspruch 13, dadurch gekennzeichnet, daß der der Bildpunkt-Matrix (7) nachgeordnete Clutter-Prozessor (9) des Objekt-Clutter-Detektors (4) eine der untersuchten Zahl von Referenzmengen entsprechende Anzahl von parallel angeordneten Minimum-Filtern (32.1 bis 32.4) aufweist, die die Minima der Helligkeitswerte von zugehörigen strukturierten Gebieten ermitteln, daß die Ausgänge der Minimum-Filter (32.1. bis 32.4) an die ersten Eingänge von jeweils einem nachgeordneten Regelprozessor (33.1 bis 33.4) angeschlossen ist, an deren zweiten Eingängen jeweils die den jeweiligen Matrixmittelpunkten entsprechenden Pixel anstehen und an deren dritten Eingängen der Ausgang eines Schwellwertspeichers (34) angeschlossen ist, und daß die Ausgänge der Regelprozessoren (33.1 bis 33.4) mit den Eingängen eines Oder-Verknüpfungsgliedes (35) verbunden sind, welches die markierten Pixel der strukturierten Gebiete zur Erzeugung eines Binärbildes fusioniert.

**18.** Schaltungsanordnung nach Anspruch 17, dadurch gekennzeichnet, daß dem Oder-Verknüpfungsglied (35) zwei in Serie geschaltete Verzögerungsleitungen (36.1 bis 36.2) jeweils von der Länge einer Spalte des digitalen Bildes, eine Matrix (37) zur Dilatation des Binärbildes in horizontaler und vertikaler Richtung und ein weiteres Oder-Verknüpfungsglied (38) zur Ausgabe der markierten strukturierten Gebiete nachgeordnet sind.

**Claims**

**1.** A method for the automatic detection of stationary or moving objects in the natural environment of a real time image sequence using an electrooptical sensor that scans the environment, with a downstream evaluation unit and an optionally provided image display device, comprising the following steps:

a) scanning a digital image supplied by the sensor by at least three matrices each containing a plurality of pixels, each matrix being assigned a reference quantity outside the associated matrix centre and the reference quantities of each matrix differing from one another,

b) determining the maximum and minimum of the brightness values of each reference quantity,

c) marking the pixel corresponding to the respective matrix centre when firstly that pixel is brighter by a first threshold value than the maximum of the brightness values of the associated reference quantity and secondly when the spread of the associated reference quantity is smaller than a further fixed threshold value, the difference of the maximum and the minimum being used here as a measure of the spread of the brightness values,

d) determining for an image the number of intermediate results, that is to say marked pixels of the digital image, and comparing the current count results with an upper and a lower fixed limit and using them to regulate the respective first threshold values by

- raising the first threshold value when the current count results are greater than the upper limit,
- lowering the first threshold value when the current count results are smaller than the lower limit, and
- leaving the first threshold value unchanged when the current count results lie within the range defined by the upper and lower specified limit or are equal to the upper or lower limit, and

e) marking the adjacent pixels of each marked pixel of the digital image, so that all the marked pixels form a dilated quantity, and AND-ing the dilated quantity elements obtained from a reference quantity with the other dilated quantity elements each obtained from a reference quantity,
characterised by the following further steps:

f) reducing the digital image supplied by the sensor by the factor $2^n$ in at least a first of n reduction stages forming a reduction pyramid in order to produce digital partial images the number of which in the x- and y-direction of the digital image respectively corresponds to the reduction factor $2^n$ of the associated reduction stage n,

g) carrying out steps a to e in succession for each produced digital partial image of an associated reduction stage, the "AND-ed" dilated quantity elements of each digital partial image forming a partial end result, that is to say a result quantity representing a detected object, in an associated reduction stage of the reduction pyramid, and, as further partial end results, redundant result quantities of different reduction stages which each mark the same object in various similar partial images forming "horizontal redundancies", and redundant result quantities of the different reduction stages which each mark the same object when that object has a given intensity distribution in size and shape forming "vertical redundancies";

h) "OR-ing" the horizontal redundancies for each marked object by horizontal fusion to form a single detection result for each detected object, consisting of x/y-coordinates, reduction stage and size, and

i) storing the detection results for the detected objects in a result memory (6), the detected objects being ordered in a list in dependence upon allocated overall priorities in such a manner that detected objects lying above an adjustable horizon have a higher priority than detected objects lying below the horizon.

2. A method according to claim 1, characterised in that the higher priority objects are used in a target-tracking process to track all significant objects in real time.

3. A method according to claim 1, characterised in that

- for the detection results of each detected object a partial amplitude a is determined in accordance with the formula a = S * wch , wherein S is the size of the associated object and wch is a weighting factor dependent upon the reduction stage,
- for each reduction stage the partial amplitudes a determined and the associated coordinate values as vectors are stored in a respective list as partial amplitude vectors,

- for all partial amplitude vectors of each list the partial amplitude vectors of other lists lying within a fusion radius are identified and combined, and
- for every detected object the fusion priority thereof contributing to the overall priority is determined by summing all the associated partial amplitudes within the fusion circle.

4. A method according to claim 3, characterised in that the fusion radius rf determined by the number of reduction stages to be fused is ascertained in dependence upon the largest reduction stage n by the formula rf = $2^{(n=1)}$ + 2 .

5. A method according to claim 1, characterised in that a partial multi-stage priority pmch contributing to the overall priority of a detected object is determined by the formula pmch = A x total-ch , wherein A is a scaling factor and total-ch indicates the total number of the reduction stages in which the detected object is marked and, where appropriate, stored as an object characteristic in an object list.

6. A method according to claim 1, characterised in that a measure for structured regions of each matrix of the digital image supplied by the sensor is determined in a clutter processor (9) by marking a pixel corresponding to the respective matrix centre when the difference between the intensity of that pixel and the intensity minimum of each reference quantity is greater than a given threshold value, fusing the markings by an "OR operation" to produce a binary image, feeding the binary image to a filter for the adding-up of each pixel by the four nearest horizontally adjacent pixels, and determining the structured regions cl by the formula
$(cl)_{ij} = (rb)_{ij-2} + (rb)_{ij-1} + (rb)_{ij+1} + (rb)_{ij+2}$ ,
wherein (rb) is the binary image and i,j indicate the index for the vertical and the horizontal direction.

7. A method according to claim 6, characterised in that a priority pc of the structured regions cl that is to be deducted from the overall priority of a detected object is determined according to the relationship pc = B x $cl^2$ , wherein B is a scaling factor to be optimised with the other system parameters.

8. A method according to claim 6, characterised in that, during horizontal filtering of the binary image, two variables that serve as control parameters for the determination of two thresholds for the structured regions cl are determined.

9. A method according to claim 8, characterised in that the variables (N0, N4) are determined from the total numbers of all the structured regions having the values 0 and the values 4, respectively.

**10.** A method according to claim 1, 6, 7, 8 or 9, characterised in that the structured regions cl are used to determine the adjustable horizon as follows:

- by adding up the values of the structured regions in the horizontal direction a cumulative value of a structured region $(hc)_i$ in the horizontal direction is determined according to the relationship $(hc)_i = (cl)_{i1} + (cl)_{i2} + ... + (cl)_{in}$,
- the cumulative values of the structured regions $(hc)_i$ in the vertical direction are filtered, the filtered cumulated value for each row being $(hcf)_i = (hc)_{i-1} + (hc)_i + (hc)_{i+1}$, and
- beginning at the top row, each filtered cumulated value $(hcf)_i$ is compared with an upper and a lower limit in such a manner that a row is marked as the position of the horizon when the filtered cumulated value $(hcf)_i$ of that row is greater than the upper limit, and the old position of the horizon is ignored when the filtered cumulated value $(hcf)_i$ of a row is smaller than the lower limit.

**11.** A method according to claim 10, characterised in that the partial horizon priority ph is determined by the formula $ph = y-H$, wherein y represents the vertical coordinate of a detected object and H represents the position of the horizon.

**12.** A method according to any one of claims 1 to 11, characterised in that the overall priority p for each detected object is determined by algebraic addition of all the partial priorities according to the relationship $p = pf + pmch + pc + ph + ...$.

**13.** A circuit arrangement for carrying out the method according to any one of claims 1 to 12 using an electrooptical sensor that scans the environment, with a downstream evaluation unit and an optionally provided image display device, wherein there are arranged downstream of the optoelectronic sensor a preliminary filter (1), a time-delay circuit (3) and a number of parallel-arranged maximum-minimum filters (11.1 to 11.4) corresponding to the number of reference quantities examined, which determine the maxima and minima of the brightness values of the associated reference quantities, the outputs of the maximum-minimum filters (11.1 to 11.4) being connected to the inputs of a respective downstream control processor (12.1 to 12.4) to determine the number of marked pixels of the digital image as intermediate results, the outputs of which control processors are connected, on the one hand, to a respective input of an event counter (16) to determine the current count results for the purpose of comparing the current count results with an upper and a lower fixed limit and for controlling the respective first threshold values in the control processors (12.1 to 12.4) and, on the other hand, to the inputs of a respective one of four matrices (18.1 to 18.4) for expansion of the dilation of the marked pixels corresponding to the respective matrix centres by marked neighbouring pixels to form dilated quantity elements and for AND-ing the dilated quantity elements of a reference quantity with the quantity elements obtained from another reference quantity, characterised in that

- there is arranged downstream of the electrooptical sensor an image spot matrix (7) which processes the image data stream consisting of seven adjacent columns to give four reference quantities with a pixel corresponding to the respective matrix centre,
- there is arranged between the preliminary filter (1) and the time-delay circuit (3) an image memory (2) for storing each digital image of a real time image sequence provided by the electrooptical sensor and having at least three reference quantities,
- there is arranged downstream of the time-delay circuit (3) an object and clutter detector (4) the object processor of which comprises, in addition to the maximum-minimum filters (11.1 to 11.4), the control processors (12.1 to 12.4), the event counter (16), the matrices (18.1 to 18.4) and the AND logic element (20), also four OR logic elements, arranged downstream of the matrices (18.1 to 18.4), for the dilation (19.1 to 19.4), the outputs of which are connected to the inputs of the AND logic element (20) and of a second OR logic element (21) to produce binary images for area markings of the structured regions, and a third OR logic element (22), connected to the AND logic element (20), for the fusion of the horizontal redundancies, at the output of which the object markings appear as a binary image and the second input of which is connected to the output of an AND element (24) for controlling the horizontal redundancy fusion,
- and there is arranged downstream of the object and clutter detector (4) a result memory (6) for storing the coordinates and priorities of the detected objects and as an intermediate store for calculating the object coordinates and priorities by means of a control device (5) which addresses the digital images read into the image memory (2) pixel-by-pixel and controls two sets of thresholds of the object processor in dependence upon the determined position of the horizon.

**14.** A circuit arrangement according to claim 13, characterised in that the sets of thresholds each comprise a threshold value memory (13a, 13b and 14a, 14b) for storing a threshold value lying above the horizon and a threshold value lying below the horizon (T1 and T2, respectively), and there is arranged down-stream of the threshold memories (13a, 13b and 14a, 14b) of each set of thresholds a selection threshold (15.1 and 15.2, respectively) the outputs of which are connected to the threshold value inputs of the control processors (12.1 to 12.4).

15. A circuit arrangement according to claim 13, characterised by two respective series-connected delay lines (17.1 to 17.8) of the length of a column of the digital image of a real time image sequence, one respective delay line (17.1, 17.3, 17.5 and 17.7) being connected to a respective second input and the serial delay lines (17.1, 17.2; 17.3, 17.4; 17.5, 17.6 and 17.7, 17.8) being connected to a respective third input of the matrices (18.1 to 18.4).

16. A circuit arrangement according to claim 13, characterised in that, for further processing of the binary image of the object marking, one input of a matrix (26) is connected to the output of the OR logic element (22), a second input of the matrix (26) is connected to the output of the OR logic element (22) via a delay line (25.1) of the length of the column of a digital image, and a third input of the matrix (26) is connected to the output of the OR logic element (22) via two series-connected delay lines (25.1 and 25.2) each of the length of the column of a digital image, the outputs of the matrix (26) are connected to the inputs of a summing element (27) in order to calculate the marking amplitudes, and there are arranged downstream of the summing element (27) two further series-connected delay lines (28.1, 28.2), a matrix (29) for providing the marking amplitudes for a maximum detector (30) for marking the amplitude maximum and an AND logic element (31) for suppressing the amplitudes that do not represent a maximum and for outputting the marking amplitude.

17. A circuit arrangement according to claim 13, characterised in that the clutter processor (9) of the object-clutter detector (4) arranged downstream of the image spot matrix (7) has a number of parallel-arranged minimum-filters (32.1 to 32.4) corresponding to the number of reference quantities examined, which minimum-filters determine the minima of the brightness values of associated structured regions, the outputs of the minimum-filters (32.1 to 32.4) are connected to the first inputs of a respective downstream control processor (33.1 to 33.4), to the second inputs of which the pixels corresponding to the respective matrix centres are applied and to the third inputs of which the output of a threshold value memory (34) is connected, and the outputs of the control processors (33.1 to 33.4) are connected to the inputs of an OR logic element (35) which fuses the marked pixels of the structured regions to produce a binary image.

18. A circuit arrangement according to claim 17, characterised in that there are arranged downstream of the OR logic element (35) two series-connected delay lines (36.1 to 36.2) each of the length of a column of the digital image, a matrix (37) for dilation of the binary image in the horizontal and vertical direction and a further OR logic element (38) for outputting the marked structured regions.

## Revendications

1. Procédé Pour la détection automatique d'objets fixes ou en mouvement dans un environnement naturel d'une suite d'images en temps réel en utilisant un capteur optoélectronique analysant l'environnement avec une unité d'évaluation agencée en aval et avec éventuellement un dispositif de représentation d'image, avec les étapes suivantes :

a) une image numérique fournie par le capteur est analysée par au moins trois matrices contenant à chaque fois plusieurs pixels, un ensemble de référence en dehors du centre de matrice associé étant prescrit à chaque matrice et les ensembles de référence de chaque matrice étant différents les uns des autres,
b) le maximum et le minimum des valeurs de luminosité sont déterminés pour chaque ensemble de référence,
c) le pixel correspondant au centre de matrice respectif est alors marqué si premièrement ce pixel est plus lumineux d'une première valeur de seuil que le maximum des valeurs de luminosité de l'ensemble de référence associé et si deuxièmement la dispersion de l'ensemble de référence associé est plus petite qu'une autre valeur de seuil fixe, la différence entre le maximum et le minimum étant utilisée comme mesure pour la dispersion des valeurs de luminosité,
d) le nombre des pixels marqués de l'image numérique, à savoir des résultats intermédiaires, est déterminé pour une image et les résultats de compteur actuels sont comparés à une limite fixe supérieure et à une limite fixe inférieure et ils sont utilisés pour le réglage des premières valeurs de seuil respectives de telle sorte que

- la première valeur de seuil est augmentée Lorsque les résultats de compteur actuels sont supérieurs à la limite supérieure,
- la première valeur de seuil est diminuée lorsque les résultats de compteur actuels sont inférieurs à la limite inférieure, et

- la première valeur de seuil reste inchangée lorsque les résultats de compteur actuels sont à l'intérieur du domaine défini par la limite supérieure et par la limite inférieure ou sont égaux à la limite inférieure ou supérieure, et

e) les pixels voisins de chaque pixel marqué de l'image numérique sont marqués de telle sorte que tous les pixels marqués forment un ensemble dilaté et les éléments d'ensemble dilatés obtenus à partir d'un ensemble de référence sont combinés par un ET aux autres éléments d'ensemble dilatés résultant à chaque fois d'un ensemble de référence, caractérisé par les autres étapes suivantes :

f) dans au moins un premier étage parmi n étages de réduction formant une pyramide de réduction, l'image numérique fournie par le capteur est réduite du facteur $2^n$ pour produire des images partielles numériques dont le nombre dans la direction x et dans La direction y de l'image numérique correspond à chaque fois au facteur de réduction $2^n$ de l'étage de réduction n associé,

g) pour chaque image partielle numérique produite dans un étage de réduction, les étapes a à e du procédé sont exécutées successivement, les éléments d'ensemble dilatés et "combinés par ET" de chaque image partielle numérique, à savoir un résultat final partiel, formant à chaque fois un ensemble résultat, qui représente un objet détecté, dans un étage de réduction associé de la pyramide de réduction, et les ensembles résultats redondants, en tant que résultats finals partiels, de différents étages de réduction qui marquent chacun le même objet dans différentes images partielles analogues formant alors des "redondances horizontales" et les ensembles résultats redondants, en tant que résultats finals partiels, de différents étages de réduction qui marquent chacun le même objet si celui-ci a une répartition d'intensité prédéterminée en taille et en forme formant alors des "redondances verticales",

h) les redondances horizontales pour chaque objet marqué sont "combinées par OU" par fusion horizontale pour chaque objet détecté en un seul résultat de détection constitué des coordonnées x/y, de l'étage de réduction et de la taille,

i) les résultats de détection pour les objets détectés sont mémorisés dans une mémoire de résultats (6), les objets détectés étant ordonnés en une liste en fonction de priorités totales associées de telle sorte que des objets détectés situés au-dessus d'un horizon réglable ont une plus grande priorité que des objets détectés situés au-dessous de l'horizon.

2. Procédé selon la revendication 1, caractérisé par le fait qu'on utilise les objets de plus grande priorité dans un procédé de poursuite pour poursuivre en temps réel tous les objets significatifs.

3. Procédé selon la revendication 1, caractérisé par le fait que :

- pour les résultats de détection de chaque objet détecté, on détermine une amplitude partielle a selon la formule a = S * wch , S étant la taille de l'objet associé et wch étant un facteur de pondération dépendant de l'étage de réduction,
- pour chaque étage de réduction, on mémorise les amplitudes partielles déterminées a et les valeurs de coordonnées associées comme vecteurs dans une liste à chaque fois comme vecteurs d'amplitudes partielles,
- pour tous les vecteurs d'amplitudes partielles de chaque liste, on détermine et on regroupe les vecteurs d'amplitudes partielles, se trouvant à l'intérieur d'un rayon de fusion, d'autres listes, et
- pour chaque objet détecté, on détermine sa priorité de fusion contribuant à la priorité totale en additionnant toutes les amplitudes partielles associées à l'intérieur du cercle de fusion.

4. Procédé selon la revendication 3, caractérisé par le fait qu'on obtient le rayon de fusion rf, déterminé par le nombre des étages de réduction à fusionner, en fonction du plus grand étage de réduction n selon la formule rf = $2^{(n+1)}$ + 2 .

5. Procédé selon la revendication 1, caractérisé par le fait qu'une priorité partielle d'étages multiples pmch contribuant à la priorité totale d'un objet détecté est déterminée selon la formule pmch = A x total-ch , A étant un facteur d'échelle et total-ch étant le nombre total des étages de réduction dans lesquels l'objet détecté est marqué et est éventuellement enregistré comme caractéristique d'objet dans une liste d'objets.

6. Procédé selon la revendication 1, caractérisé par le fait qu'on détermine dans un processeur d'écho (9) une mesure pour des régions structurées de chaque matrice de l'image numérique fournie par le capteur de telle sorte qu'on marque un pixel correspondant au centre de matrice respectif si la différence entre l'intensité de ce pixel et le minimum d'intensité de chaque ensemble de référence est plus grande qu'une valeur de seuil prescrite, qu'on fusionne les marquages par une "combinaison OU" pour produire une image binaire, qu'on envoie l'image binaire à un filtre pour former par addition chaque pixel à partir des quatre pixels suivants voisins dans la direction horizontale et qu'on détermine les régions structurées cl selon la formule $(Cl)_{ij} = (rb)_{ij-2} + (rb)_{ij-1} + (rb)_{ij+1} + (rb)_{ij+2}$, $(rb)$ étant l'image binaire et i, j étant les indices pour les directions verticale et horizontale.

7. Procédé selon la revendication 6, caractérisé par le fait qu'on détermine une priorité pc, à soustraire de la priorité totale d'un objet détecté, des régions structurées cl selon la relation $pc = B \times cl^2$, B étant un facteur d'échelle à optimiser avec les autres paramètres du système.

8. Procédé selon la revendication 6, caractérisé par le fait que, pendant le filtrage horizontal de l'image binaire, on détermine deux variables servant de paramètres de contrôle pour la détermination de deux seuils pour les régions structurées cl.

9. Procédé selon la revendication 8, caractérisé par le fait qu'on détermine les variabies (N0, N4) à partir des nombres totaux de toutes les régions structurées ayant les valeurs zéro ou ayant les valeurs 4.

10. Procédé selon les revendications 1, 6, 7, 8 ou 9, caractérisé par le fait qu'on utilise les régions structurées cl pour la détermination de l'horizon réglable de telle sorte que

    - en additionnant les valeurs des régions structurées dans la direction horizontale, on détermine une valeur cumulée d'une région structurée $(hc)_i$ dans la direction horizontale selon la relation $(hc)_i = (cl)_{i1} + (cl)_{i2} + .... + (cl)_{in}$,
    - on filtre les valeurs cumulées des régions structurées $(hc)_i$ dans la direction verticale, la valeur cumulée filtrée pour chaque rangée étant $(hcf)_i = (hc)_{i-l} + (hc)_i + (hC)_{i+1}$, et
    - à partir de la rangée la plus haute, on compare chaque valeur cumulée filtrée $(hcf)_i$ à une limite supérieure et à une limite inférieure de telle sorte qu'on marque une rangée comme position de l'horizon si la valeur cumulée filtrée $(hcf)_i$ de cette rangée est plus grande que la limite supérieure et qu'on ignore l'ancienne position de l'horizon si la valeur cumulée filtrée $(hcf)_i$ est plus petite que la limite inférieure.

11. Procédé selon la revendication 10, caractérisé par le fait qu'on détermine la priorité d'horizon partielle ph selon la formule $ph = y - H$, y étant la coordonnée verticale d'un objet détecté et H étant la position de l'horizon.

12. Procédé selon l'une des revendications 1 à 11, caractérisé par le fait qu'on détermine la priorité totale p pour chaque objet détecté au moyen d'une addition algébrique de toutes les priorités partielles selon la relation $p = pf + pmch + pc + ph + ....$.

13. Circuit pour la mise en oeuvre du procédé selon l'une des revendications 1 à 12, utilisant un capteur optoélectronique analysant l'environnement avec une unité d'évaluation agencée en aval et avec éventuellement un dispositif de représentation d'image, dans lequel un premier filtre (1), un circuit de retardement (3) et un nombre, correspondant au nombre examiné d'ensembles de référence, de filtres à maximum et à minimum (11.1 à 11.4) qui sont agencés en parallèle et qui déterminent les maxima et les minima des valeurs de luminosité des ensembles de référence associés sont agencés en aval du capteur optoélectronique et dans lequel les sorties des filtres à maximum et à minimum (11.1 à 11.4) sont raccordées aux entrées de processeurs de réglage (12.1 à 12.4) qui sont agencés respectivement en aval, qui sont destinés à la détermination du nombre des pixels marqués de l'image numérique comme résultats intermédiaires et dont les sorties sont raccordées d'une part à chaque fois à une entrée d'un compteur d'événements (16) pour la détermination des résultats de compteurs actuels en vue d'une comparaison des résultats de compteurs actuels avec des limites fixes supérieure et inférieure et pour le réglage des premières valeurs de seuil respectives dans les processeurs de réglage (12.1 à 12.4) et d'autre part aux entrées à chaque fois d'une parmi quatre matrices (18.1 à 10.4) pour l'extension ou la dilatation du pixel marqué, correspondant au centre de matrice respectif, avec des pixels voisins marqués en éléments d'ensemble dilatés et pour la combinaison par ET des éléments d'ensemble dilatés d'un ensemble de référence et des éléments d'ensemble dilatés obtenus à partir d'un autre ensemble de référence, caractérise par le fait

    - qu'il est agencé en aval du capteur optoélectronique une matrice de pixels (7) qui prépare, le flux de données d'image, constitué de sept colonnes voisines, pour former quatre ensembles de référence avec un pixel correspondant au centre de matrice respectif,
    - qu'il est agencé entre le premier filtre (1) et le circuit de retardement (3) une mémoire d'image (2) pour la mémorisation de chaque image numérique, fournie par le capteur optoélectronique et comportant au moins trois ensembles de référence, d'une suite d'images en temps réel,
    - qu'il est agencé en aval du circuit de retardement (3) un détecteur d'objet et d'écho (4) dont le processeur d'objet comporte, outre les filtres à maximum et minimum (11.1 à 11.4), outre les processeurs de réglage (12.1 à 12.4), outre le compteur d'événements (16), outre les matrices (18.1 à 18.4) et outre l'élément combinatoire ET (20), aussi quatre éléments combinatoires OU (19.1 à 19.4) qui sont agencés en aval des matrices (18.1 à 18.4), qui sont destinés à la dilatation, dont les sorties sont raccordées aux entrées de l'élément combinatoire ET (20) et d'un deuxième élément combinatoire OU (21) pour la production d'images binaires en vue des marquages de surface des régions structurées, ainsi qu'un troisième élément combinatoire OU (22) qui est raccordé à l'élément combinatoire ET (20), qui est destiné à la fusion des redondances horizontales, à la sortie duquel se trouvent les marquages d'objet comme image binaire et dont la deuxième entrée est raccordée à la sortie d'un élément ET (24) pour la commande de la fusion de redondances horizontales,

- et qu'il est agencé en aval du détecteur d'objet et d'écho (4) une mémoire de résultats (6) pour la mémorisation des coordonnées et des priorités des objets détectés ainsi que comme mémoire intermédiaire pour le calcul des coordonnées et des priorités d'objets au moyen d'un dispositif de commande (5) qui adresse pixel par pixel les images numériques enregistrées dans la mémoire d'image (2) et qui commande deux blocs de seuils du processeur d'objet en fonction de la position déterminée de l'horizon.

**14.** Circuit selon la revendication 13, caractérisé par le fait que les blocs de seuil comportent à chaque fois une mémoire de valeurs de seuil (13a, 13b ou 14a, 14b) pour la mémorisation d'une valeur de seuil (T1 ou T2) se trouvant au-dessus de l'horizon et d'une valeur de seuil (T1 ou T2) se trouvant au-dessous de l'horizon et qu'il est agencé en aval des mémoires de valeurs de seuil (13a, 13b ou 14a, 14b) de chaque bloc de valeurs de seuil un seuil de sélection (15.1 ou 15.2) dont les sorties sont raccordées aux entrées à valeurs de seuil des processeurs de réglage (12.1 à 12.4).

**15.** Circuit selon la revendication 13, caractérisé par à chaque fois deux lignes à retard branchées en série (17.1 à 17.8) de la longueur d'une colonne de l'image binaire d'une suite d'images en temps réel, une ligne à retard (17.1, 17.3, 17.5 ou 17.7) étant raccordée respectivement à une deuxième entrée des matrices (18.1 à 18.4) et les lignes à retard branchées en série (17.1, 17.2 ; 17.3, 17.4 ; 17.5, 17.6 ou 17.7, 17.8) étant raccordées respectivement à une troisième entrée des matrices (18.1 à 18.4).

**16.** Circuit selon la revendication 13, caractérisé par le fait que, pour le traitement ultérieur de l'image binaire du marquage d'objet, il est raccordé à la sortie de l'élément combinatoire OU (22) une entrée d'une matrice (26), une deuxième entrée de la matrice (26) par l'intermédiaire d'une ligne à retard (25.1) de la longueur d'une colonne d'une image binaire et une troisième entrée de la matrice (26) par l'intermédiaire de deux lignes à retard branchées en série (25.1 et 25.2) chacune de la longueur d'une colonne d'une image binaire, que les sorties de la matrice (26) sont reliées aux entrées d'un élément additionneur (27) pour le calcul des amplitudes de marquage, qu'il est agencé en aval de l'élément additionneur (27) deux autres lignes à retard branchées en série (28.1, 28.2), une matrice (29) pour la préparation des amplitudes de marquage pour un détecteur de maximum (30) en vue du marquage du maximum d'amplitude et un' élément combinatoire ET (31) pour la suppression des amplitudes qui ne représentent pas un maximum et pour la délivrance de l'amplitude de marquage.

**17.** Circuit selon la revendication 13, caractérisé par le fait que le processeur d'écho (9), agencé en aval de la matrice de pixels (7), du détecteur d'objet et d'écho (4) comporte un nombre, correspondant au nombre examiné d'ensembles de référence, de filtres de minimum (32.1 à 32.4) qui sont agencés en parallèle et qui déterminent les minima des valeurs de luminosité de régions structurées associées, que les sorties des filtres de minimum (32.1 à 32.4) sont raccordées aux premières entrées des processeurs de réglage respectifs agencés en aval (33.1 à 33.4) aux deuxièmes entrées desquelles se trouvent les pixels correspondant aux centres de matrices respectifs et dont les troisièmes entrées sont raccordées à la sortie d'une mémoire de valeurs de seuil (34) et que les sorties des processeurs de réglage (33.1 à 33.4) sont reliées aux entrées d'un élément combinatoire OU (35) qui fusionne les pixels marqués des régions structurées pour produire une image binaire.

**18.** Circuit selon la revendication 17, caractérisé par le fait qu'il est agencé en aval de l'élément combinatoire OU (35) deux lignes à retard (36.1 à 36.2), branchées en série et chacune de la longueur d'une colonne de l'image numérique, une matrice (37) pour la dilatation de l'image binaire dans les directions horizontale et verticale et un autre élément combinatoire OU (38) pour la délivrance des régions structurées marquées.

EP 0 651 264 B1

Bild-Eingang → **FIR-Filter** (1) → **Bild-speicher** (2) → **Delay-Lines** (3) → **Objekt & Clutter Detektor** (4) → **Ergebnis-speicher** (6) → Objekt-Koordinate / Objekt-Priorität

**Steuer-Einrichtung** (5)

Fig. 1

Fig. 2

Fig. 3

Fig. 4

EP 0 651 264 B1

Schwelle

34

Zentral-
Pixel

Cluster 1

32.1

33.1

Cluster 2

32.2

33.2

35

≥ 1

37

3 x 3
Matrix

38

≥ 1

Clutter-
Markierung

Cluster 3

32.3

33.3

36.1    36.2

Cluster 4

32.4

33.4

Fig. 5